# FASCICULE DE BREVET EUROPEEN

(11) **EP 0 826 281 B1**
(45) Date de publication et mention de la délivrance du brevet: **02.06.2004**
(21) Numéro de dépôt: 97907161.0
(22) Date de dépôt: 03.03.1997
(51) Int. Cl.: H04L 29/06

(54) **PROCEDE DE SECURISATION DES ACCES D'UNE STATION A AU MOINS UN SERVEUR ET DISPOSITIF METTANT EN OEUVRE LE PROCEDE**
VERFAHREN UND GERÄT ZUR SICHERUNG DES ZUGANGS EINER STATION ZU MINDESTENS EINEM SERVER
METHOD ENABLING SECURE ACCESS BY A STATION TO AT LEAST ONE SERVER, AND DEVICE USING SAME

(30) Priorité: 07.03.1996 FR 9602901
(43) Date de publication de la demande: 04.03.1998
(73) Titulaire: CP8 Technologies, 78431 Louveciennes (FR)
(72) Inventeur: SIGAUD, Alain, F-78990 Elancourt (FR)
(74) Mandataire: Corlu, Bernard
(86) Numéro de dépôt international: PCT/FR1997/000371
(87) Numéro de publication internationale: WO 1997/033415

(56) Documents cités:
- DATA COMMUNICATIONS, vol. 24, no. 16, 21 Novembre 1995, pages 71-78, 80, XP000545336 NEWMAN D ET AL: "CAN FIREWALLS TAKE THE HEAT?"
- IEEE COMMUNICATIONS MAGAZINE, vol. 32, no. 9, 1 Septembre 1994, pages 50-57, XP000476555 BELLOVIN S M ET AL: "NETWORK FIREWALLS"
- CONNEXIONS, vol. 9, no. 7, 1 Juillet 1995, pages 20-23, XP000564023 TED DOTY: "A FIREWALL OVERVIEW"

## Description

La présente invention concerne un procédé de sécurisation des accès d'une station à au moins un serveur et le dispositif mettant en oeuvre le procédé.

Il est connu dans les réseaux de communication entre serveurs et stations de chercher à sécuriser les communications surtout lorsque celles-ci mettent en jeu des informations sensibles pour les applications exécutées sur la station avec le concours du serveur. Jusqu'à présent le principe de sécurisation consistait à rajouter entre l'application et les couches des protocoles de communication du réseau une partie de programme de sécurisation. Cette couche de programme était implantée à la fois sur le terminal et sur le serveur. L'inconvénient d'une telle méthode est qu'elle nécessite la modification des applications ou des couches de télécommunication et une partie de programmation réalisant l'interface entre le programme sécuritaire proprement dit et l'application spécifique. Pour chaque application il est donc nécessaire de développer une interface de programme spécifique. Par ailleurs chaque serveur dans la mesure où le terminal est connecté sur un réseau multi serveur, doit être sécurisé. Le temps de programmation nécessaire pour chaque application combiné à la nécessité de sécuriser chaque serveur venait grever lourdement le budget nécessaire pour sécuriser une application.

Il est aussi connu dans l'art antérieur, par le document intitulé « Can firewalls take the heat ? » extrait de DATA COMMUNICATIONS, vol. 24, no. 16, du 21 novembre 1995, le fait de sécuriser les accès en provenance de station d'utilisateurs à destination de serveurs en interposant un processeur de sécurité, mais ceux-ci nécessitent l'installation d'un programme spécifique sur les stations d'utilisateurs.

Le but de l'invention est de proposer un procédé de sécurisation qui ne nécessite aucune modification des programmes d'application exécutés sur les terminaux et aucune modification des serveurs.

Ce but est atteint par le procédé défini dans la revendication 1.

D'autres particularités sont définies dans les revendications 2-6.

Un autre but de l'invention est de proposer un dispositif permettant la mise en oeuvre du procédé.

Ce but est atteint par le dispositif défini dans la revendication 7.

D'autres particularités sont définies dans les revendications 8 et 9.

Selon une particularité les moyens d'établir les communications sont constituées par deux cartes réseau local telles que, par exemple, Ethernet, anneau à jeton (token ring), l'une reliée à la station, l'autre reliée au serveur et communiquant avec la station et le serveur selon le protocole de communication multi sessions multi port.

D'autres particularités et avantages de la présente invention apparaîtront plus clairement à la lecture de la description ci-après faite en référence aux dessins annexés dans lesquels :
la figure 1 représente une vue du schéma de principe du dispositif permettant la mise en oeuvre du procédé de sécurisation ;
la figure 2A représente la boite de dialogue gérée par le logiciel de sécurité du terminal ;
la figure 2B représente une autre boite de dialogue signalant l'absence de lecteur ou de carte ;
la figure 2 C représente une autre boite de dialogue demandant le code porteur ;
la figure 2D représente une autre boite de dialogue permettant le choix du serveur destinataire ;
la figure 2E représente une autre boite de dialogue permettant une saisie d'une chaîne de caractères ;
la figure 2F représente la fenêtre principale.

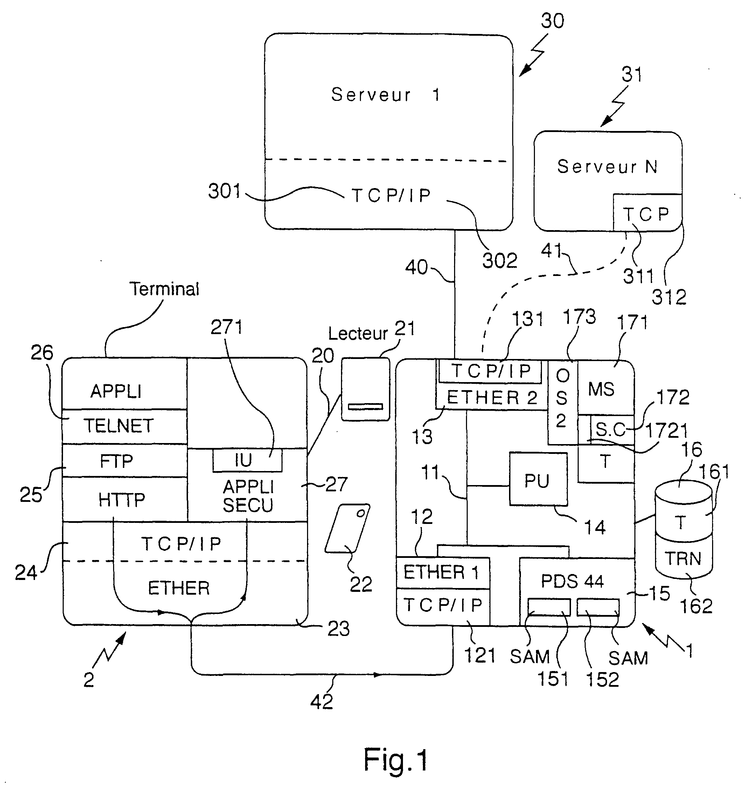

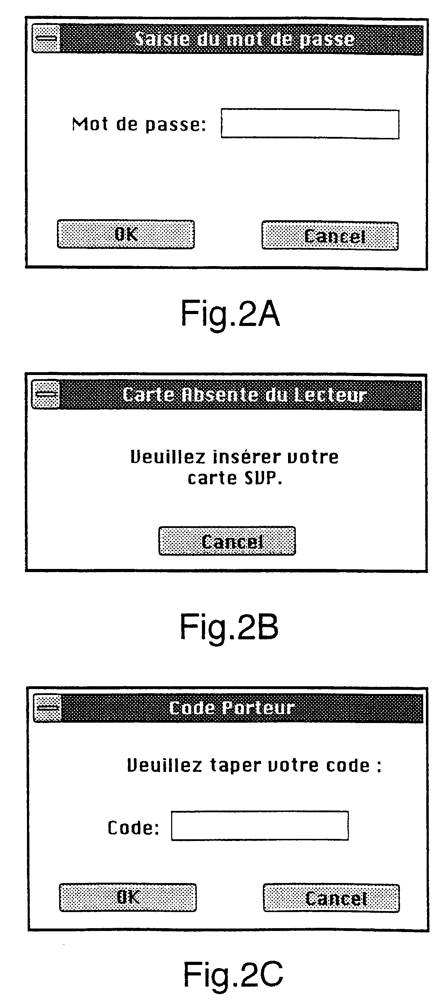

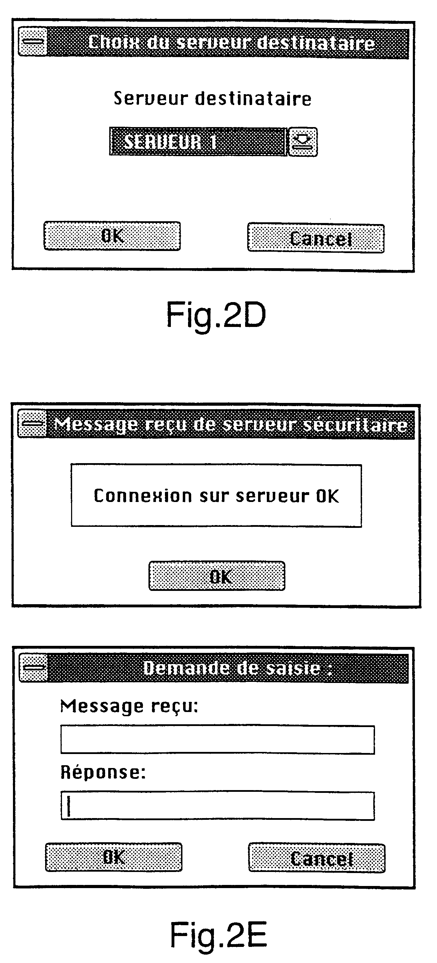

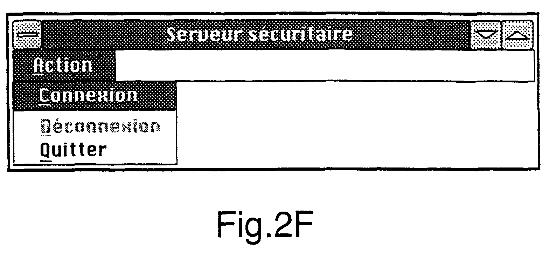

L'invention va maintenant être décrite en liaison avec les figures 1 et 2. L'invention s'implante sur un réseau constitué de terminaux (2) communiquant à travers un réseau constitué par des liaisons (42, 40, 41), avec un ou plusieurs serveurs (30, 31). Les terminaux peuvent être soit connectés localement sur le réseau du serveur ou peuvent être des micro-ordinateurs portables mobiles se connectant à travers des réseaux de télécommunication de tout type, réseau connecté, GSM, RNIS. Sur un tel réseau fonctionnent des applications, telles qu'une application de service terminal à distance, par exemple, de type Telnet ou des services de transfert de fichiers tels que, par exemple, FTP ou des protocoles utilisés par INTERNET tel que HTTP ou encore tout autre application connue actuellement. Le réseau est constitué de cartes réseau local par exemple de type Ethernet (23) sur l'ordinateur du terminal fonctionnant avec un protocole de télécommunication 24 du type multi sessions et multi ports tel que par exemple le protocole TCP/IP. Chaque serveur (30, 31) comporte également une carte Ethernet (302, 312) et un protocole TCP/IP associé (301, 311). Pour sécuriser le réseau il suffit d'interposer, dans le cas où le réseau comporte plusieurs serveurs, au noeud de jonction des serveurs situé dans la même enceinte que les serveurs un processeur de sécurité (1) qui dialogue avec un ou plusieurs terminaux (2) du réseau. Chacun des terminaux (2) est équipé d'une application de sécurité constituée d'un logiciel (27) et d'une liaison physique (20) avec un lecteur (21) d'objets portables (22). Ces objets portables (22) peuvent être du type carte à puce ou carte PC/MCIA.

Le processeur de sécurité (1) est constitué d'une unité de traitement (14) comprenant une carte électronique type PC (Personal Computer) avec les mémoires correspondantes et communique par un bus (11) avec une première carte réseau type Ethernet (13) reliée à chacun des serveurs (30, 31) par une liaison respective (40, 41) et avec une deuxième carte réseau de type Ethernet (12) reliée au terminal par une liaison (42). Le bus (11) communique également avec une carte d'application sécuritaire (15) qui comporte une unité de traitement, des mémoires non représentée, et des modules MCS (S.A.M Security Application Module) de contrôle de sécurité (151, 152). L'installation peut comporter n cartes comprenant chacune n modules de contrôle de sécurité MCS (151, 152). Ces modules MCS (151, 152) permettent de réaliser, en liaison avec le lecteur (21) et l'objet portable, des fonctions de sécurité telles que l'authentification, la certification, le calcul de clé de chiffrement, etc..., tout en assurant l'inviolabilité des clés secrètes de base. Ces fonctions de sécurité mettent en oeuvre également les informations contenues dans la carte à puce ou l'objet portable (22) relié par le lecteur (21) à l'application de sécurité (27) du terminal (2). L'unité de traitement (14) fonctionne avec un système d'exploitation (173) multitâches, par exemple, de type OS2 pour permettre au processeur sécuritaire (1) d'exécuter plusieurs tâches en parallèle. Chaque carte Ethernet (12, 13) comporte sa couche logiciel permettant de mettre en oeuvre le protocole de télécommunication propre au réseau, tel que le protocole TCP/IP (131, 121). En plus du système d'exploitation l'unité de traitement (14) fonctionne avec un serveur de communication (172) qui comporte une couche (1721) permettant le traitement des communications entre la première (13) et la deuxième (12) carte selon le protocole du réseau de type TCP/IP. Ce serveur de communication (172) a pour rôle de déterminer si la liaison entre la deuxième carte Ethernet (12) et la première carte (13) reliée au serveur doit se faire en direct ou si cette liaison ne peut se faire qu'après mise en oeuvre d'une procédure sécuritaire. Cette détermination s'effectue par la lecture d'un fichier APPLI.INI mémorisé dans une mémoire (16) et comportant une table de correspondance entre l'application et au moins le scénario sécuritaire à mettre en oeuvre. Dans le cas de la mise en oeuvre ce serveur de communication fait appel à un moteur de sécurité (171) qui déclenchera le fonctionnement de la carte d'application sécuritaire (15) du processeur de sécurité (1) permettant de mettre en oeuvre les fonctions de sécurité. Le moteur de sécurité MS permet de configurer le réseau sécuritaire, de définir la liste des applications traitées par le processeur de sécurité, de définir les traitements effectués, de définir les scénarios de sécurité à mettre à oeuvre, de définir les droits d'accès des utilisateurs et les calendriers d'autorisation. L'application de sécurité (27) mise en place sur le terminal fonctionne également avec un système d'exploitation du type à affichage à fenêtre tel que le logiciel Windows (marque déposée). Une fois le chargement du logiciel de sécurité (27) effectué sur la station, ce dernier permet à l'utilisateur du terminal, par l'affichage d'une fenêtre principale (figure 2F) affichée après le lancement de l'application sécuritaire, soit l'activation de la connexion de sécurité soit la désactivation de la connexion de sécurité ou encore de sortir de l'application. Comme représenté à la figure 2F, la sélection d'une des trois fonctions disponibles s'effectue en amenant la surbrillance sur la fonction souhaitée puis en validant par un "clic" souris ou par l'action de la touche "entrée" du clavier. L'utilisateur se connecte sur le réseau sécurisé en spécifiant l'adresse IP du processeur sécuritaire (1) et le numéro de port affecté à l'application qu'il veut utiliser (par exemple, X pour l'application sécuritaire, 21 pour l'application FTP, 23 pour Telnet, etc...). Le processeur de sécurité (1) recherche dans une table le scénario de sécurité associé au numéro de port envoyé par la station et établit ensuite une communication avec l'application sécuritaire (27) pour mettre en oeuvre le scénario sécuritaire avec notamment authentification de l'objet l'utilisateur par son code porteur de carte (P.I.N.). De façon optionnelle le processeur de sécurité (1) peut faire afficher sur la station la liste d'applications, celles utilisées par l'utilisateur définies par les listes d'applications autorisées et par les listes d'applications non autorisées pour celles interdites. L'utilisateur effectue ensuite par des actions sur le clavier ou la souris la sélection d'un couple serveur application. Dès que le scénario sécuritaire s'est déroulé normalement et l'utilisateur lance l'application choisie (Telnet, FTP, HTTP, ...) en validant la sélection. Le processeur de sécurité (1) reçoit du terminal (2) un numéro de port correspondant à l'application, détermine dans ses tables l'adresse IP du serveur d'application et établis la connexion vers le serveur d'application demandé. Une fois la connexion établie entre le terminal (2) et un des serveurs (30, 31), le processeur de sécurité supervise les sessions applicatives établies en effectuant des contrôles sécuritaires cycliques vers le terminal (2). En cas d'anomalie sécuritaire détectée (telle que, retrait de carte, inactivité, mauvais calcul de signature,...), le processeur de sécurité (1) interrompt les connexions vers le serveur distant et rompt la session de sécurité.

Plusieurs scénarios de sécurité peuvent être mis en oeuvre et le choix du scénario activé se fait en fonction du numéro de port de l'application indiqué dans les données de connexion. Ces informations de numéro de port et de scénario associé sont dans un fichier ACCUEIL.CAM qui constitue une partie d'une table (161) de la mémoire de masse (16) du processeur de sécurité (1). L'activation d'une connexion sécuritaire met en oeuvre un scénario d'accueil qui permet de réaliser n'importe quel traitement parmi un ou plusieurs des traitements suivants : l'affichage et la saisie de données ; le contrôle des adresses IP source et destination ; le contrôle d'accès par mot de passe ; le contrôle d'accès par carte à microprocesseur permettant la mise en oeuvre de l'identification du porteur, de l'authentification à partir d'un module sécurité MCS, d'un chiffrement, d'une signature, d'un calcul de certificat, d'une lecture et écriture d'informations, d'un contrôle d'arrachage de cartes, la vérification du droit d'accès de l'utilisateur au serveur distant dans les listes d'applications et de serveurs autorisés, les listes d'applications et de serveurs non autorisés et les listes d'abonnés. Ces droits d'accès et ces listes constituant une partie de la table T (161) ; le contrôle des droits d'utilisation des différents services du protocole de télécommunication TCP/IP ; la vérification de la plage horaire et calendaire autorisée pour l'utilisateur ou pour l'accès de la machine choisie, cette plage horaire et calendaire autorisée faisant l'objet d'une table comportant d'une part, en colonne les plages horaires et, en lignes l'identité des utilisateurs ou machines. Enfin l'affichage d'un menu personnalisé permet le choix d'une des applications ou serveurs distants autorisés pour l'utilisateur. Le fichier APPLI.INI permet de mémoriser dans la mémoire (16), d'identifier en fonction de l'application le scénario de sécurisation à activer ainsi que la période d'activation, ce qui permet selon le scénario et la période d'activation choisie de déclencher cycliquement l'activation d'un scénario en fonction de l'application du serveur distant choisi. Le scénario périodique vérifie que l'utilisateur distant est bien celui habilité en demandant à la carte du terminal d'effectuer des signatures électroniques d'informations (nombre aléatoire) choisies par le scénario. Le scénario ayant à charge de vérifier à l'aide du MCS que ces signatures ont été produites par une carte disposant des clés secrètes adéquates. Ce procédé permet de se prémunir notamment contre le vol d'adresses IP provenant d'un dispositif intrus sur le réseau. Lorsque l'utilisateur a choisi le serveur distant et l'application, le processeur de sécurité récupère le numéro de port de l'application et utilise un fichier local, pour ouvrir une connexion avec le serveur distant choisi par le processeur sécuritaire. Ce serveur choisi par le processeur sécuritaire peut être différent de celui indiqué par l'utilisateur. L'utilisateur recevra simplement les communications à travers le processeur de sécurité. Ces communications sont adressées à la station (2) grâce à son numéro de port. Enfin le processeur de sécurité permet grâce au moteur de sécurité (171) de tenir dans la mémoire de masse (16) un journal (162) des connexions qui mémorise un numéro séquentiel de connexion, les dates et heures de début et fin de connexion, l'adresse IP source et le numéro de port, l'identifiant de l'objet de sécurité utilisé, le nom du serveur distant choisit, l'adresse IP de destination, le numéro de port, le volume de données échangées entre la station et le serveur lors de la session applicative, le statut d'exécution. L'application de sécurité (27) comporte un module de présentation (271) qui permet d'utiliser le système d'affichage à fenêtre et boite de dialogue du système d'exploitation Windows pour permettre par l'affichage d'une première boite de dialogue (figure 2A) de demander à l'utilisateur la saisie d'un mot de passe puis ensuite la validation de ce mot ou l'abandon de l'opération qui entraîne la désactivation de la connexion de sécurité. L'interface utilisateur permet également d'afficher une deuxième boite de dialogue (figure 2B) indiquant les messages "carte absente du lecteur" et "veuillez insérer votre carte SVP" ainsi qu'une troisième boite de dialogue (figure 2C) permettant de saisir le code du porteur de la carte avec des boutons de validation ou d'annulation de la procédure. Enfin une quatrième boite de dialogue permet de sélectionner le serveur destinataire en permettant la sélection parmi une liste déroulante des serveurs possibles du réseau. Deux autres boites de dialogue permettent, l'une l'affichage de messages reçus du processeur sécuritaire puis une autre boite (figure 2E) permet la demande de saisie d'une chaîne de caractères. On comprend que l'on a ainsi sécurisé les accès et permis de sélectionner les conditions des procédures d'accès au choix de la personne chargée de la sécurité, de plus la périodicité des connexions sécuritaires permet d'éviter qu'un fraudeur se connecte à un moment donné en faisant semblant de se substituer au terminal connecté au réseau car s'il ne possède pas les clés d'accès au terminal, les procédures sécuritaires ne l'identifient pas et interdisent la session. Enfin cette solution présente l'avantage de rester transparente par rapport au protocole des applications circulant sur la connexion. En effet l'installation du système sécuritaire se fait sans modification des applications sur les terminaux et encore moins sur les serveurs.

Lors de l'installation du logiciel sécuritaire (27) et du processeur de sécurité (1), l'installateur définit dans un fichier d'initialisation (SERVEUR.INI) un délai de sécurité qui permet au processeur (1) de fermer la connexion de sécurité établie avec un poste client s'il n'y a pas de connexion applicative depuis le délai déterminé et un délai d'inactivité qui permet au processeur de fermer la connexion de sécurité et les connexions applicatives établies avec un poste client s'il n'y a pas de données échangées sur les connexions applicatives depuis le délai déterminé.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de sécurisation des accès à au moins un serveur d'applications (30) permettant de sécuriser les accès en provenance de stations (2) d'utilisateur et à destination d'au moins un serveur d'applications à travers un réseau (42) utilisant un protocole de télécommunication multi sessions et multi ports, au moyen d'un processeur de sécurité (1) interposé entre les stations d'utilisateur (2) à protéger pendant le déroulement des sessions d'applications et le ou les serveurs d'applications (30, 31) à protéger et **caractérisé en ce qu'**il comporte les étapes suivantes:
- établissement systématique d'une session de sécurité en parallèle pendant le déroulement des sessions d'applications entre, d'une part une des stations d'utilisateur (2), et d'autre part le processeur de sécurité (1), le processeur de sécurité choisissant le ou les serveurs (30, 31) en fonction de l'application demandée par la station d'utilisateur (2) ;
- déclenchement par le processeur de sécurité (1) de contrôles sécuritaires cycliques avec la station d'utilisateur (2) ;

2. Procédé de sécurisation des accès à au moins un serveur d'applications selon la revendication 1, **caractérisé en ce que** l'étape d'établissement systématique d'une session de sécurité comporte les étapes suivantes :
- transmission par la station d'utilisateur (2) sur le réseau d'une adresse source IP et d'au moins un numéro de port associé à l'application demandée par la station d'utilisateur (2) ;
- recherche par le processeur de sécurité (1) du scénario sécuritaire associé à l'application ;
- établissement de la session de sécurité entre le processeur de sécurité (1) et la station d'utilisateur (2) ;
- recherche par le processeur de sécurité (1) dans un fichier local du nom et de l'adresse du serveur d'applications (30) utilisé pour l'application, et ouverture d'une connexion avec le serveur d'applications (30) par communication d'une adresse IP et d'un numéro de port.

3. Procédé de sécurisation des accès à au moins un serveur d'applications (30, 31) selon la revendication 2, **caractérisé en ce que** le scénario associé à une application consiste à établir directement la liaison entre la station d'utilisateur(2) et le serveur d'applications (30) choisi par le processeur de sécurité (1).

4. Procédé de sécurisation des accès à au moins un serveur d'applications (30, 31) selon la revendication 2 **caractérisé en ce que** le scénario de sécurité à mettre en oeuvre et défini dans une table mémorisée permet au choix une ou plusieurs des fonctions ci-après d'authentification de l'utilisateur, d'identification de l'utilisateur, de contrôle de ses droits, de certification, de calculs de clés de chiffrement, de calculs de signatures, de vérifications de profils de l'utilisateur pour donner un accès sélectif à des applications demandées sur le serveur d'applications (30).

5. Procédé de sécurisation des accès à au moins un serveur d'applications (30, 31) selon la revendication 2, **caractérisé en ce que** le processeur de sécurité (1) mémorise un journal (162) dans une mémoire (16) comportant un numéro séquentiel de connexion, les dates et heures de début et fin de connexion, l'adresse IP source et au moins un numéro de port, l'identifiant de l'objet de sécurité utilisé, le nom du serveur d'applications (30) choisi, l'adresse IP de destination et le numéro de port, les statuts d'exécution.

6. Procédé de sécurisation des accès à au moins un serveur d'applications (30,31) selon une des revendications précédentes, **caractérisé en ce que** le processeur de sécurité (1) mémorise dans une table d'exploitation (161) d'une mémoire (16) la liste des applications traitées par le processeur, les traitements à effectuer en fonction du type de la connexion, les scénarios de sécurité à mettre en oeuvre, les droits d'accès des utilisateurs par définition d'une liste d'applications ou de serveurs d'applications (30, 31) que la station d'utilisateur (2) est autorisée à utiliser, une liste d'applications ou de serveurs d'applications (30, 31) que la station d'utilisateur (2) n'est pas autorisée à utiliser et une liste d'abonnés, les calendriers d'autorisation d'accès aux serveurs d'applications.

7. Dispositif comprenant un processeur de sécurité (1) pour sécuriser des accès en provenance d'une station d'utilisateur (2) et à destination d'au moins un serveur d'applications (30, 31) à travers un réseau (42) utilisant un protocole de télécommunication multi sessions et multi ports, un logiciel de sécurité (27) étant installé sur la station d'utilisateur (2) pour gérer des échanges avec un objet portable (22) et un lecteur d'objet portable (21) associé à la station d'utilisateur (2) ainsi que les échanges avec un protocole (24) de communication multi sessions et multi ports, **caractérisé en ce que** le processeur de sécurité (1) comporte des moyens d'établir (12, 13) les communications entre la station d'utilisateur (2) et un ou plusieurs serveurs d'applications (30, 31) choisi par le processeur en fonction de l'application demandée par la station d'utilisateur (2), le processeur de sécurité (1) comportant également des moyens de contrôler (14, 15, 172, 171) lesdites communications et d'établir systématiquement une session de sécurité avec la station d'utilisateur (2) en parallèle aux sessions d'application et des moyens de déclencher des contrôles sécuritaires cycliques.

8. Dispositif selon la revendication 7, **caractérisé en ce que** les moyens d'établir et de contrôler les communications entre la station d'utilisateur (2) et un ou plusieurs serveurs d'applications (30, 31) permettent soit d' instaurer la communication directe entre la station d'utilisateur(2) et le serveur d'applications (30), soit d'instaurer une communication entre la station d'utilisateur (2) et le serveur d'application (30) après établissement de la session de sécurité contrôlée par une carte d'application sécuritaire (15) comportant un microprocesseur équipé de mémoires nécessaires à son fonctionnement et communiquant avec des modules de contrôle de sécurité (151, 152) permettant d'interpréter les scénarios sécuritaires décidés par un processeur principal (14) exécutant les programmes de serveur de communication (172) et de moteur de sécurité (171).

9. Dispositif selon la revendication 7 ou 8, **caractérisé en ce que** les moyens d'établir (12, 13) les communications sont constitués par deux cartes de télécommunication, l'une reliée à la station d'utilisateur (2), l'autre reliée au serveur d'applications (30) et communiquant avec la station d'utilisateur (2) et le serveur d'applications (30) selon le protocole de communication multi sessions multi ports.

## Patentansprüche

1. Sicherungsverfahren der Zugänge zu mindestens einem Applikationsserver (30) zum Sichern der Zugänge über ein Netz (42) unter Anwendung eines Mehrfachsitzungs- und Mehrfachanschluss-Telekommunikationsprotokolls von Anwenderstationen (2) zu mindestens einem Applikationsserver mittels einem Sicherheitsprozessor (1), der während des Ablaufs der Applikationssitzungen zwischen den zu schützenden Anwenderstationen (2) und dem bzw. den zu schützenden Anwenderservern (30, 31) zwischengeschaltet ist, **dadurch gekennzeichnet, dass** es folgende Etappen umfasst:
- systematisches Zustandekommen einer parallelen Sicherheitssitzung während des Ablaufs der Applikationssitzungen zwischen einerseits einer der Anwenderstationen (2) und andererseits dem Sicherheitsprozessor (1), wobei der Sicherheitsprozessor den bzw. die Server (30, 31) entsprechend der von der Anwenderstation (2) gewünschten Applikation auswählt;
- Auslösen durch den Sicherheitsprozessor (1) von zyklischen Sicherheitskontrollen an der Anwenderstation (2).

2. Sicherungsverfahren der Zugänge zu mindestens einem Applikationsserver nach Anspruch 1, **dadurch gekennzeichnet, dass** der Schritt des systematischen Zustandekommens einer Sicherheitssitzung folgende Schritte umfasst:
- Übertragen durch die Anwenderstation (2) an das Netz einer IP-Ausgangsadresse und mindestens einer der von der Anwenderstation (2) gewünschten Applikation zugeordneten Anschlussnummer;
- Suchen durch den Sicherheitsprozessor (1) des der Applikation zugeordneten Sicherheitsszenarios;
- Zustandekommen der Sicherheitssitzung zwischen dem Sicherheitsprozessor (1) und der Anwenderstation (2);
- Suchen durch den Sicherheitsprozessor (1) in einer lokalen Datei nach Namen und Adresse des für die Applikation verwendeten Applikationsservers (30) und Herstellen einer Verbindung mit dem Applikationsserver (30) durch Kommunikation einer IP-Adresse und einer Anschlussnummer.

3. Sicherungsverfahren der Zugänge zu mindestens einem Applikationsserver (30, 31) nach Anspruch 2, **dadurch gekennzeichnet, dass** das einer Applikation zugeordnete Szenario darin besteht, direkt zwischen der Anwenderstation (2) und dem vom Sicherheitsprozessor (1) gewählten Applikationsserver (30) die Verbindung herzustellen.

4. Sicherungsverfahren der Zugänge zu mindestens einem Applikationsserver (30, 31) nach Anspruch 2, **dadurch gekennzeichnet, dass** das einzusetzende und in einer gespeicherten Tabelle definierte Sicherheitsszenario wahlweise eine oder mehrere der folgenden Funktionen wie Authentifizierung des Anwenders, Identifizieren des Anwenders, Kontrolle seiner Rechte, Zertifizierung, Berechnen von Verschlüsselungsschlüsseln, Berechnen von Unterschriften sowie Prüfen von Profilen des Anwenders ermöglicht, um einen selektiven Zugang zu auf dem Applikationsserver (30) gewünschten Applikationen zu gewähren.

5. Sicherungsverfahren der Zugänge zu mindestens einem Applikationsserver (30, 31) nach Anspruch 2, **dadurch gekennzeichnet, dass** der Sicherheitsprozessor (1) in einem Speicher (16) eine Aufzeichnung (162) speichert, die eine Verbindungsfolgenummer, Datum und Uhrzeit von Start und Ende der Verbindung, die IP-Ausgangsadresse und mindestens eine Anschlussnummer, das Kennzeichen des verwendeten Sicherheitsobjekts, den Namen des gewählten Applikationsservers (30), die IP-Zieladresse und die Anschlussnummer sowie den jeweiligen Ausführungsstatus umfasst.

6. Sicherungsverfahren der Zugänge zu mindestens einem Applikationsserver (30, 31) nach einem der vorausgehenden Ansprüche, **dadurch gekennzeichnet, dass** der Sicherheitsprozessor (1) in einer Betriebstabelle (161) eines Speichers (16) die Liste der vom Prozessor bearbeiteten Applikationen, die entsprechend der Verbindungsart durchzuführenden Bearbeitungen, die einzusetzenden Sicherheitsszenarien, die Zugangsberechtigungen der Anwender durch Definition einer Liste von Applikationen oder Applikationsservern (30, 31), die die Anwenderstation (2) benutzen darf, einer Liste von Applikationen oder Applikationsservern (30, 31), die die Anwenderstation (2) nicht benutzen darf und eine Liste von Abonnenten sowie die Zeiträume der Zugangsberechtigungen zu den Applikationsservern speichert.

7. Vorrichtung mit einem Sicherheitsprozessor (1) zum Sichern der Zugänge über ein Netz (42) einer Anwenderstation (2) zu mindestens einem Applikationsserver (30, 31) unter Anwendung eines Mehrfachsitzungs- und Mehrfachanschluss-Telekommunikationsprotokolls sowie einer an der Anwenderstation (2) zum Steuern des Austausches mit einem tragbaren Objekt (22) und einem der Anwenderstation (2) zugeordneten Lesegerät für tragbare Objekte (21) sowie zum Steuern des Austausches mit einem Mehrfachsitzungs- und Mehrfachanschlusskommunikationsprotokoll (24) installierten Sicherheitssoftware (27), **dadurch gekennzeichnet, dass** der Sicherheitsprozessor (1) Mittel (12, 13) zum Herstellen der Kommunikationen zwischen der Anwenderstation (2) und einem oder mehreren vom Prozessor entsprechend der von der Anwenderstation (2) gewünschten Applikation gewählten Applikationsservern (30, 31) umfasst, wobei der Sicherheitsprozessor (1) auch Mittel (14, 15, 172, 171) zur Kontrolle der besagten Kommunikationen und zum systematischen Zustandekommen einer Sicherheitssitzung mit der Anwenderstation (2) parallel zu den Applikationssitzungen und Mittel zum Auslösen der zyklischen Sicherheitskontrollen umfasst.

8. Vorrichtung nach Anspruch 7, **dadurch gekennzeichnet, dass** die Mittel zum Herstellen und Kontrollieren der Kommunikationen zwischen der Anwenderstation (2) und einem oder mehreren Applikationsservern (30, 31) entweder die Herstellung der direkten Kommunikation zwischen der Anwenderstation (2) und dem Applikationsserver (30) oder die Herstellung einer Kommunikation zwischen der Anwenderstation (2) und dem Applikationsserver (30) nach Zustandekommen der von einer Sicherheitsapplikationskarte (15) kontrollierten Sicherheitssitzung ermöglichen, wobei diese Sicherheitsapplikationskarte einen Mikroprozessor mit für seinen Betrieb erforderlichen Speichern umfasst und mit den Sicherheitskontrollmodulen (151, 152) kommuniziert, die ein Interpretieren der vom Hauptprozessor (14) festgelegten Sicherheitsszenarien ermöglichen, wobei der Hauptprozessor die Kommunikationsserverprogramme (172) und Sicherheitsmotorprogramme (171) ausführt.

9. Vorrichtung nach Anspruch 7 oder 8, **dadurch gekennzeichnet, dass** die Mittel zum Herstellen (12, 13) der Kommunikationen aus zwei Telekommunikationskarten bestehen, wobei eine mit der Anwenderstation (2) und die andere mit dem Applikationsserver (30) verbunden ist und mit der Anwenderstation (2) und dem Applikationsserver (30) gemäß dem Mehrfachsitzungsund Mehrfachanschlusskommunikationsprotokoll kommunizieren.

## Claims

1. Method enabling secure access to at least one application server (30) to secure the accesses from user stations (2) and to at least one application server via a network (42) with a multi-session, multi-port telecommunication protocol, using a security processor (1) interposed between the user stations (2) to be protected during the execution of the application sessions and the application server(s) (30, 31) to be protected and **characterised in that** it includes the following steps:
- systematic creation of a security session in parallel during the execution of the application sessions between, firstly one of the user stations (2), and secondly the security processor (1), the security processor choosing the server(s) (30, 31) depending on the application requested by the user station (2);
- triggering by the security processor (1) of cyclic security checks with the user station (2);

2. Method enabling secure access to at least one application server according to claim 1, **characterised in that** the step to systematically create a security session includes the following steps:
- transmission by the user station (2) on the network of an IP source address and at least one port number associated with the application requested by the user station (2);
- search by the security processor (1) for the security scenario associated with the application;
- creation of the security session between the security processor (1) and the user station (2);
- search by the security processor (1) in a local file for the name and address of the application server (30) used for the application and opening of a connection with the application server (30) by communication of an IP address and a port number.

3. Method enabling secure access to at least one application server (30, 31) according to claim 2, **characterised in that** the scenario associated with an application consists of setting up directly the link between the user station (2) and the application server (30) chosen by the security processor (1).

4. Method enabling secure access to at least one application server (30, 31) according to claim 2, **characterised in that** the security scenario to be implemented and defined in a stored table offers the choice of one or more of the following functions, user authentication, user identification, check of user rights, certification, encryption key calculations, signature calculations, verifications of user profiles in order to provide selective access to applications requested on the application server (30).

5. Method enabling secure access to at least one application server (30, 31) according to claim 2, **characterised in that** the security processor (1) stores a log (162) in a memory (16) including a sequential connection number, the dates and times of start and end of connection, the source IP address and at least one port number, the identifier of the security object used, the name of the chosen application server (30), the destination IP address and the port number, the execution statuses.

6. Method enabling secure access to at least one application server (30, 31) according to one of the previous claims, **characterised in that** the security processor (1) stores in an operating table (161) of a memory (16) the list of applications processed by the processor, the processing operations to be carried out depending on the type of connection, the security scenarios to be implemented, the user access rights by defining a list of applications or application servers (30, 31) that the user station (2) is authorised to use, a list of applications or application servers (30, 31) that the user station (2) is not authorised to use and a subscriber list, the authorisation schedules for access to the application servers.

7. Device comprising a security processor (1) to secure accesses from a user station (2) and to at least one application server (30, 31) via a network (42) using a multi-session, multi-port telecommunication protocol, security software (27) being installed on the user station (2) to manage exchanges with a portable object (22) and a portable object reader (21) associated with the user station (2) and the exchanges with a multi-session, multi-port communication protocol (24), **characterised in that** the security processor (1) includes means (12, 13) to set up the communications between the user station (2) and one or more application servers (30, 31) chosen by the processor depending on the application requested by the user station (2), the security processor (1) also including means to check (14, 15, 172, 171) said communications and systematically set up a security session with the user station (2) in parallel with the application sessions and means to trigger cyclic security checks.

8. Device according to claim 7, **characterised in that** the means to set up and check the communications between the user station (2) and one or more application servers (30,31) can be used either to set up the direct communication between the user station (2) and the application server (30), or to set up a communication between the user station (2) and the application server (30) after setting up the security session checked by a security application board (15) including a microprocessor equipped with memories required for its operation and communicating with security access modules (151,152) in order to interpret the security scenarios selected by a main processor (14) running the communication server (172) and security engine (171) programs.

9. Device according to claim 7 or 8, **characterised in that** the means (12, 13) to set up the communications consist of two telecommunication boards, one connected to the user station (2), the other connected to the application server (30) and communicating with the user station (2) and the application server (30) according to the multi-session, multi-port communication protocol.
